(19) **Europäisches Patentamt**

**European Patent Office**

**Office européen des brevets**

(11) **EP 1 722 107 A1**

(12) **EUROPEAN PATENT APPLICATION**
published in accordance with Art. 158(3) EPC

(43) Date of publication:
**15.11.2006 Bulletin 2006/46**

(51) Int Cl.:
*F04F 5/04* (2006.01)          *H01M 8/04* (2006.01)

(21) Application number: **05720095.8**

(22) Date of filing: **01.03.2005**

(86) International application number:
**PCT/JP2005/003823**

(87) International publication number:
**WO 2005/083272 (09.09.2005 Gazette 2005/36)**

(84) Designated Contracting States:
**DE**

(30) Priority: **01.03.2004 JP 2004056050**

(71) Applicant: **TOYOTA JIDOSHA KABUSHIKI KAISHA**
**Toyota-shi,**
**Aichi-ken 471-8571 (JP)**

(72) Inventors:
• **YAMAGISHI, Norio**
  **Toyota-shi, Aichi 4718571 (JP)**
• **MISHIMA, Takashi**
  **Toyota-shi, Aichi 4718571 (JP)**
• **KUROYANAGI, Munetoshi**
  **Toyota-shi, Aichi 4718571 (JP)**

(74) Representative: **Kuhnen & Wacker**
**Patent- und Rechtsanwaltsbüro**
**Prinz-Ludwig-Strasse 40 A**
**85354 Freising (DE)**

(54) **EJECTOR AND FUEL CELL SYSTEM WITH THE SAME**

(57)     Provided are an ejector which is capable of linearly controlling an ejection flow rate relative to the amount of movement of a needle to enhance its overall applicability and a fuel cell system with this ejector. The ejector 24 includes a nozzle 46 for ejecting a fluid, a needle 48 disposed coaxial with the nozzle 46 and having a tip end portion 48a which faces the nozzle 46, and needle moving means 49 for causing the needle 48 to advance and retreat axially. The shape of the tip end portion 48a of the needle 48 is set such that the opening area Y of the gap between the tip end portion 48a of the needle 48 and the nozzle 46 and the amount Z of movement produced by the needle moving means 49 satisfy a proportional relationship.

FIG. 3A

FIG. 3B

$$(X,Z) = (\tfrac{D}{2}, 0)$$

$$Y = KZ \quad\text{------ (1)}$$

$$Y = \pi\left\{(\tfrac{D}{2})^2 - X^2\right\} \quad\text{------ (2)}$$

$$X = \sqrt{(\tfrac{D}{2})^2 - \tfrac{Y}{\pi}} = \sqrt{(\tfrac{D}{2})^2 - \tfrac{KZ}{\pi}} \quad\text{------ (3)}$$

EP 1 722 107 A1

**Description**

BACKGROUND

The present invention relates to a variable flow rate type ejector and a fuel cell system therewith.

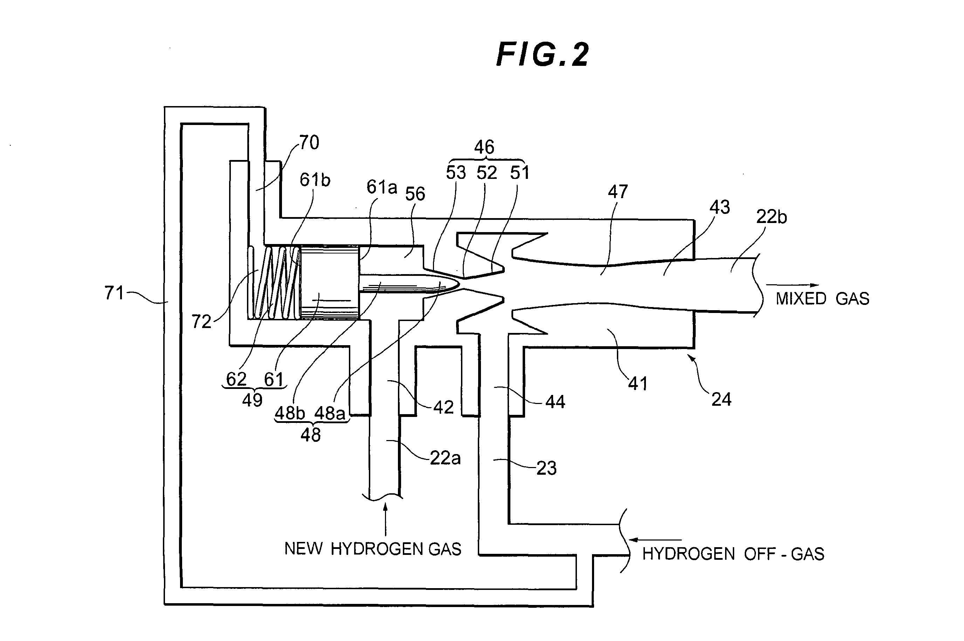

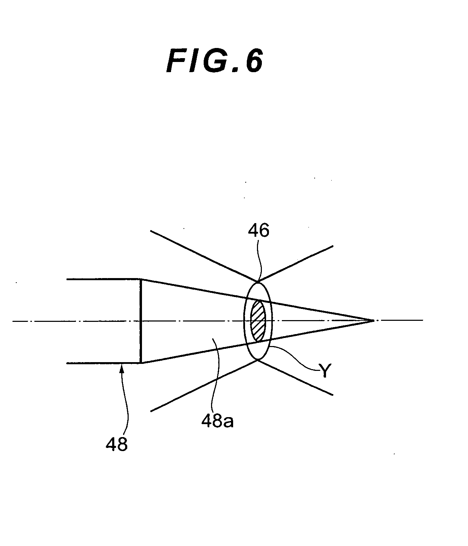

In a known conventional example of this type of ejector, as shown in Fig. 6, a needle 48 having a tip end portion 48a which faces a nozzle 46 is moved axially to vary an opening area Y which is referred to as the opening area of the nozzle hereafter, of a gap between the needle 48 and nozzle 46, whereby the flow rate which is also referred to as the ejection flow rate hereafter, of a fluid ejected through the nozzle 46 is adjusted (see Japanese Patent Laid-open Publication No. 2002-22779 (page 5 and Fig. 2), for example). The ejection flow rate is determined according to the opening area Y of the nozzle 46, and in this case, the shape of the tip end portion 48a of the needle 48, which defines the opening area Y of the nozzle 46, is linear (slanted) at a tapered part thereof.

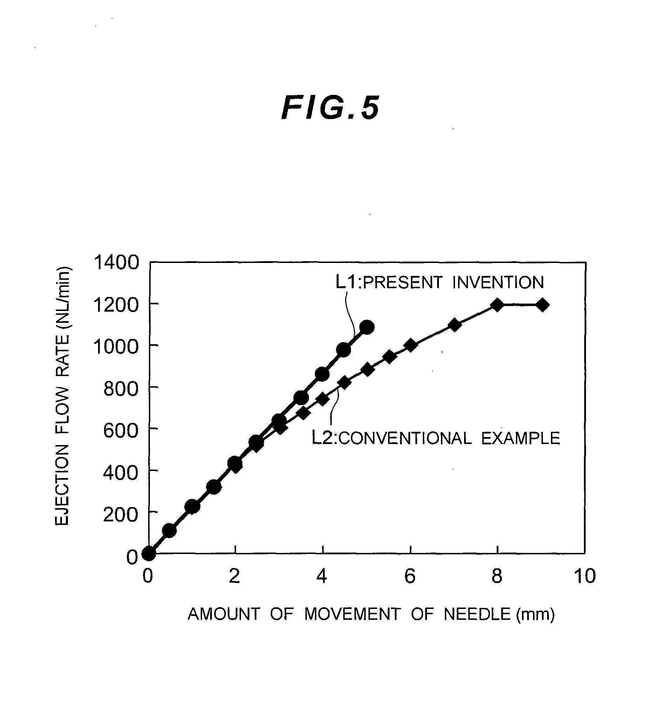

In this conventional ejector, the tapered part of the needle is linear, and therefore the opening area of the nozzle relative to the amount of movement of the needle varies in the form of a quadratic curve. Hence, as shown by a curve L2 in Fig. 5, the ejection flow rate also varies relative to the amount of movement of the needle in the form of a quadratic curve, making it difficult to control the ejection flow rate on the basis of the amount of movement of the needle. Particularly when the needle is moved by a simple mechanism having a predetermined constant of proportionality, such as a spring, it is extremely difficult to control the ejection flow rate unless the rate of change in the opening area of the nozzle corresponding to the movement of the needle is constant.

SUMMARY

An object of the present invention is to provide an ejector which is capable of linearly controlling an ejection flow rate relative to the amount of movement of a needle, thereby enhancing the overall applicability of the ejector, and also to provide a fuel cell system with the ejector.

To achieve the object, an ejector of the present invention comprises a nozzle for ejecting a fluid, a needle disposed coaxial with the nozzle and having a tip end portion which faces the nozzle, and needle moving means for causing the needle to advance and retreat axially. The shape of the tip end portion of the needle is set such that an opening area of a gap between the tip end portion of the needle and the nozzle and the amount of movement produced by the needle moving means satisfy a proportional relationship.

According to this constitution, the ejection flow rate can be controlled linearly relative to the amount of movement of the needle simply by setting the shape of the tip end portion of the needle in the manner described above. Hence, controllability of the ejection flow rate based on the amount of movement of the needle can be enhanced, and as a result, the needle moving means can be constituted by a simple mechanism having a predetermined constant of proportionality, such as a spring, for example.

In this case, the tip end portion of the needle preferably has a conical shape. Alternatively, the tip end portion of the needle preferably has a quadratic surface shape.

Alternatively, when an opening area of the nozzle in a state where the needle is not positioned in the position of the nozzle is set as A, a radius of the tip end portion of the needle in the position of the nozzle is set as X, an amount of movement produced by the needle moving means in a retreating direction from the nozzle is set as Z, and K is a constant, the tip end portion of the needle is preferably shaped such that the following equation is established.

$$X^2 = (A - KZ)/\pi$$

Another ejector of the present invention comprises a nozzle for ejecting a fluid, a needle disposed coaxial with the nozzle and having a paraboloidal tip end portion which faces the nozzle, and needle moving means for causing the needle to advance and retreat axially.

According to this constitution, the ejection flow rate is controlled substantially linearly relative to the amount of movement of the needle, and hence similar actions and effects to those of the present invention described above can be achieved.

More specifically, using the tip end (apex) of the needle as a reference (origin), when the axial length is set as Z and the length orthogonal to the axial direction (radius) is set as X, the tip end portion is a paraboloid, and therefore the following equation is established.

$$X^2 = CZ \text{ (where C is a constant)}$$

Assuming that the needle advances relative to the nozzle by the length Z, and that the opening area of the nozzle is A, the opening area Y of the gap between the nozzle and needle is expressed as follows:

$$Y = A - \pi X^2 = A - CZ \pi.$$

Hence, taking Z as the amount of movement of the needle, the opening area of the nozzle and the amount of movement of the needle are defined by a proportional relationship. As a result of the above, the applicability and freedom of the structure of the needle moving means can be enhanced.

Preferably, the needle moving means comprises a piston which is connected to a base end portion of the needle and includes a front surface and a rear surface to which a fluid is led, and a biasing member for biasing the rear surface of the piston toward the tip end portion of the needle. The needle preferably advances and retreats on the basis of the balance between the differential fluid pressure on the piston and the biasing force of the biasing member.

According to this constitution, when the pressure on the front surface of the piston is greater than the fluid pressure on the rear surface of the piston and the biasing force of the biasing member, the needle retreats axially such that the opening area of the nozzle increases, and hence the ejection flow rate increases. On the other hand, when the pressure on the front surface of the piston is smaller than the fluid pressure on the rear surface of the piston and the biasing force of the biasing member, the needle advances axially such that the opening area decreases, and thus the ejection flow rate decreases.

Thus, the needle can be moved appropriately via the piston using the differential fluid pressure effectively in this manner. Further, as the amount of movement of the needle and the ejection flow rate can be controlled proportionately as described above, the needle moving means can be constituted by a simply-structured biasing member such as a spring, eliminating the need for various actuators. Note that the fluid which is led to the piston may be identical to the fluid that is ejected through the nozzle or different. However, the fluid which is led to the rear surface of the piston is preferably the fluid that is ejected through the nozzle. The fluid ejected through the nozzle may be the fluid which passes through a diffuser on the downstream of the nozzle in the ejection direction, or the fluid that is aspirated into the diffuser upon ejection through the nozzle.

A fuel cell system of the present invention comprises the ejector of the present invention described above. The ejector is incorporated into piping of the fuel cell system, and combines a new fluid supplied to a fuel cell with a fluid discharged from the fuel cell and supplies the resulting mixture to the fuel cell.

According to this constitution, as a variable flow rate type ejector having good controllability is provided, an appropriate amount of fluid can be supplied favorably in accordance with the load on the fuel cell. Here, hydrogen gas or oxygen gas is assumed to be the fluid that is supplied to the fuel cell, and therefore a hydrogen gas supply system or an oxygen gas supply system is assumed to constitute the piping into which the ejector is incorporated. Further, a fuel cell vehicle serves as a representative of a device in which the fuel cell system is installed.

According to the ejector of the present invention and the fuel cell system therewith, the flow rate of the fluid ejected through the nozzle can be controlled linearly relative to the amount of movement of the needle by forming the needle in a predetermined shape. Hence, the structure of the needle moving means can be simplified, and an overall increase in applicability can be achieved.

DESCRIPTION OF DRAWINGS

Fig. 1 is a block diagram showing the constitution of a fuel cell system according to an embodiment;
Fig. 2 is a pattern diagram showing an ejector according to this embodiment;
Figs. 3A and 3B are an illustrative view illustrating the shape of a needle of the ejector according to this embodiment;
Figs. 4A and 4B are an illustrative view illustrating the shape of the needle of the ejector according to this embodiment;
Fig. 5 is a view showing the relationship between the amount of movement of the needle and the ejection flow rate of a fluid ejected through a nozzle in this embodiment and a conventional example; and
Fig. 6 is a pattern diagram showing the main parts of a conventional ejector.

DETAILED DESCRIPTION

An ejector and a fuel cell system with the ejector according to a preferred embodiment of the present invention will now be described with reference to the attached drawings. The ejector includes a needle tip end portion set in a predetermined shape such that the flow rate of a fluid ejected through a nozzle can be varied linearly relative to the amount of movement of the needle. Below, an example in which the ejector is incorporated into the piping of a hydrogen gas supply system of the fuel cell system will be described.

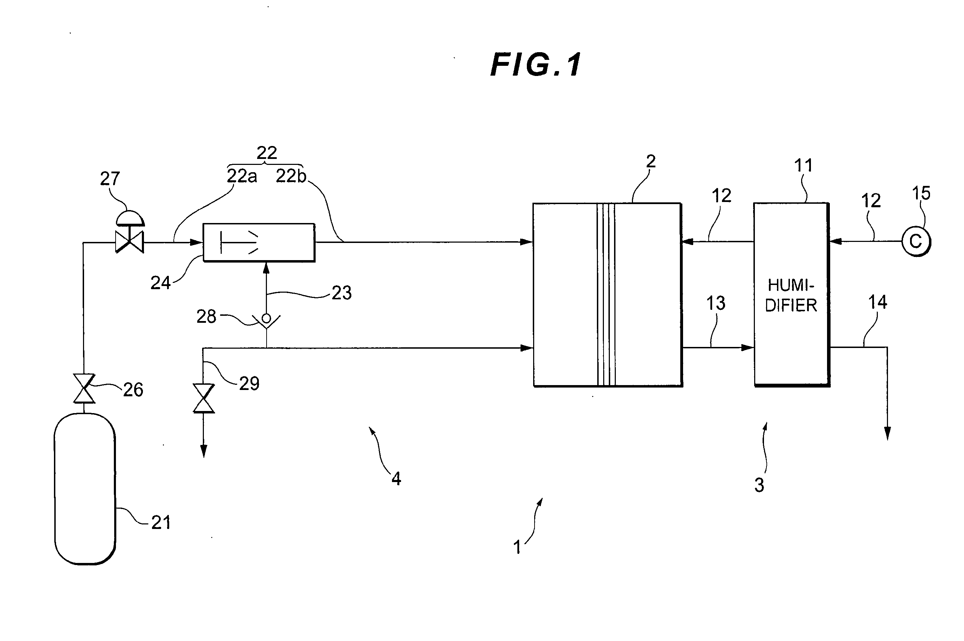

As shown in Fig. 1, a fuel cell system 1 comprises a solid polymer electrolyte fuel cell 2 which generates electric power upon reception of a supply of oxygen gas (air) and hydrogen gas. The fuel cell 2 is constituted in a stack structure comprising a large number of laminated cells. The fuel cell system 1 includes an oxygen gas supply system 3 for supplying the fuel cell 2 with oxygen gas, and a hydrogen gas supply system 4 for supplying the fuel cell 2 with hydrogen gas.

The oxygen gas supply system 3 includes a supply passage 12 for supplying the fuel cell 2 with oxygen gas that has been humidified by a humidifier 11, a circulation passage 13 for leading oxygen off-gas discharged from the fuel cell 2 to the humidifier 11, and a discharge passage 14 for leading the oxygen off-gas from the humidifier 11 to a combustor. The supply passage 12 is provided with a compressor 15 which takes in oxygen gas from the atmosphere and pumps the oxygen gas to the humidifier 11.

The hydrogen gas supply system 4 includes a hydrogen tank 21 which serves as a hydrogen supply source storing high-pressure hydrogen gas, a supply passage 22 for supplying the fuel cell 2 with the hydrogen gas in the hydrogen tank 21, a circulation passage 23 for returning hydrogen off-gas discharged from the fuel cell 2 to the supply passage 22, and an ejector 24 for circulating the hydrogen off-gas in the circulation passage 23 to the supply passage 22. New hydrogen gas from the hydrogen tank 21 is combined with the hydrogen off-gas by the ejector 24, and the combined mixed gas is supplied to the fuel cell 2.

The supply passage 22 is constituted by a main flow passage 22a positioned on the upstream side of the ejector 24, which serves as a passage for leading new hydrogen gas to the ejector 24, and a mixture passage 22b positioned on the downstream side of the ejector 24, which serves as a passage for leading the mixed gas to the fuel cell 2. A shut valve 26 for opening and closing the main flow passage 22a and a regulator valve 27 for adjusting the pressure of the hydrogen gas are interposed on the main flow passage 22a in sequence from the upstream side. A check valve 28 is interposed on the circulation passage 23 on the downstream side of a humidifier 25, and a discharge passage 29 bifurcates from the circulation passage 23. The hydrogen off-gas in the circulation passage 23 is aspirated into the ejector 24 through the check valve 28.

The ejector 24 is structured to be capable of varying the flow rate of the hydrogen gas (mixed gas) supplied to the fuel cell 2. As shown in Fig. 2, the ejector 24 includes a casing 41 constituting an outer shell thereof. The casing 41 is formed with a primary side supply port 42 connected to the downstream side of the main flow passage 22a, a secondary side discharge port 43 connected to the upstream side of the mixture passage 22b, and a tertiary side (negative pressure acting side) suction port 44 connected to the downstream side of the circulation passage 23.

The interior of the casing 41 is formed with a nozzle 46 for ejecting new hydrogen gas toward the downstream side, a diffuser 47 provided on the downstream side of the nozzle 46 for combining hydrogen off-gas with the new hydrogen gas that has passed through the nozzle 46, a needle 48 disposed coaxial with the nozzle 46 such that a tip end portion 48a thereof faces the nozzle 46, and needle moving means 49 for causing the needle 48 to advance and retreat axially.

The nozzle 46 is a so-called divergent nozzle constituted by an outlet opening portion 51 which widens toward a tip end side, a throat portion 52 having a minimum cross section which is linked to the outlet opening portion 51, and an inlet opening portion 53 which is linked to the throat portion 52 and widens toward a base end side. The outlet opening portion 51 of the nozzle 46 opens onto the diffuser 47 side, and the inlet opening portion 53 opens into a fluid chamber 56 within the casing 41 which is communicated with the supply port 42.

The diffuser 47 is formed coaxial with the nozzle 46, and an upstream side thereof between the outlet opening portion 51 of the nozzle 46 is communicated with the suction port 44. When new hydrogen gas is ejected through the nozzle 46 toward the diffuser 47, a negative pressure for aspirating the hydrogen off-gas is generated, and thus the hydrogen off-gas in the circulation passage 23 is aspirated into the diffuser 47 through the suction port 44. As a result, the new hydrogen gas and the hydrogen off-gas are combined and mixed in the diffuser 47, and this mixed gas is discharged to the mixture passage 22b from the diffuser 47 via the discharge port 43.

The needle 48 is constituted by a conical or pyramidal body, but in this embodiment is constituted by a conical body. The needle 48 is constituted by the tip end portion 48a which tapers in the hydrogen gas flow direction, and a main body shaft portion 48b which is linked integrally to the tip end portion 48a and connected to the needle moving means 49 at a base portion side thereof.

The tip end portion 48a of the needle 48 is inserted into the nozzle 46 from the inlet opening portion side 53. The opening area (to be referred to as an opening area Y of the nozzle 46 hereafter) of the gap between the tip end portion 48a and throat portion 52 can be varied by advancing and retreating the needle 48 using the needle moving means 49. By making the opening area Y of the nozzle 46 variable, the flow rate of the new hydrogen gas that is ejected through the nozzle 46 can be varied.

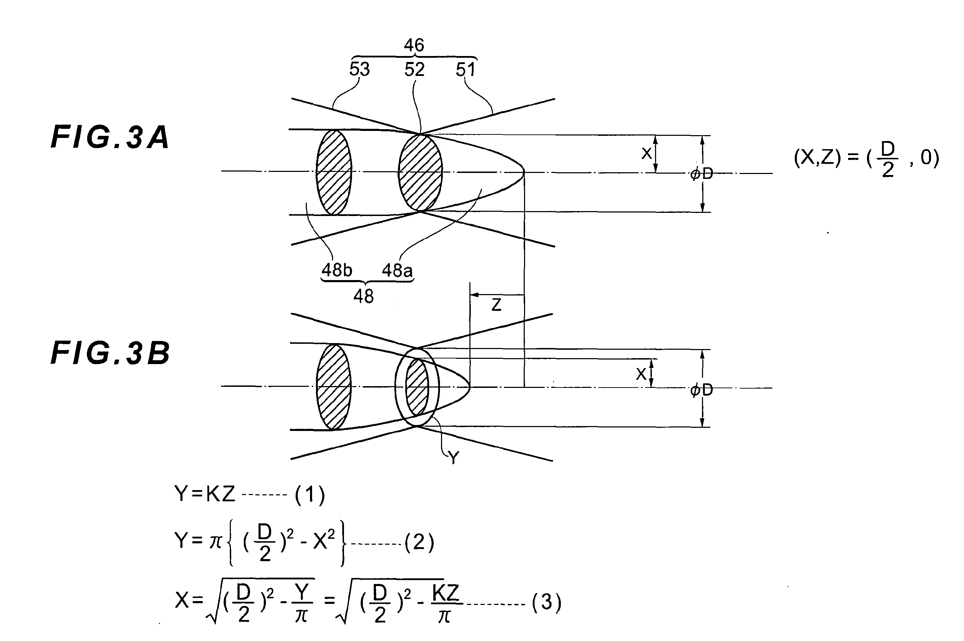

In this embodiment, the shape of the tip end portion 48a of the needle 48 is set such that the opening area Y of the nozzle 46 is proportionate to the amount (Z)of movement of the needle 48 produced by the needle moving means 49. This will now be described specifically with reference to Figs. 3A and 3B.

A state in which the needle 48 advances such that the throat portion 52 of the nozzle 46 is closed by the tip end portion 48a, as shown in Fig. 3A, is set as a default, and a state in which the needle 48 is retreated from the throat portion 52 by the amount Z of movement from the default state, as shown in Fig. 3B, will be considered. The opening area Y of the nozzle 46 is set to be proportionate to the amount Z of movement, and hence a relational expression of

$$Y = KZ \qquad\qquad \text{Equation (1)}$$

is satisfied. Here, the value of a constant of proportionality K is set in consideration of a spring 62 of the needle moving means 49, to be described below.

Further, assuming that the diameter of the throat portion 52 is D, and the radius of the tip end portion 48a of the needle 48 positioned directly below the throat portion 52 is X, the opening area Y of the nozzle 46 can be expressed as follows.

$$Y = \pi \{(D/2)^2 - X^2\} \qquad\qquad \text{Equation (2)}$$

From Equation (1) and Equation (2), the following Equation (3) can be obtained.

$$X^2 = \{(D/2)^2 - KZ/\pi\} \qquad\qquad \text{Equation (3)}$$

Note that if the opening area in a state where the tip end portion 48a of the needle 48 is not positioned directly below the throat portion 52 is set as A, then naturally the following equation is obtained.

$$A = \pi (D/2)^2$$

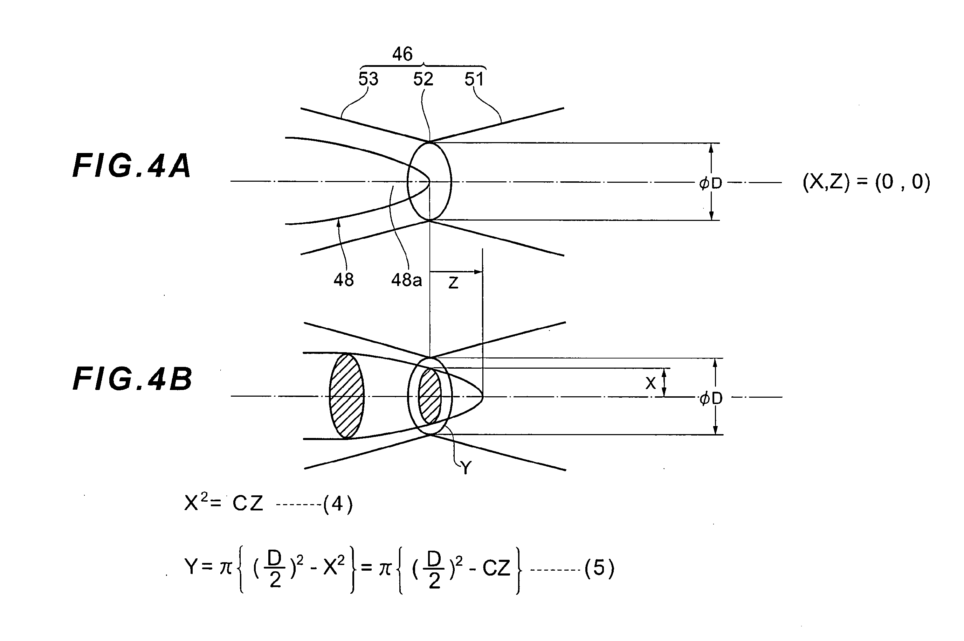

Hence in this embodiment, the shape of the tip end portion 48a of the needle 48 is set such that Equation (3) is established in relation to the radius X. Essentially, this means that the tip end portion 48a of the needle 48 has the shape of a paraboloid, which is a quadratic surface. This will now be described specifically with reference to Figs. 4A and 4B.

As shown in Fig. 4A, a state in which the needle 48 retreats such that the apex of the tip end portion 48a is positioned directly below the throat portion 52 will be considered as a default. In this state, $(X, Z) = (0, 0)$. As the tip end portion 48a is a paraboloid, when the needle 48 advances from the default state toward the throat portion 52 by the amount Z of movement, as shown in Fig. 4B,

$$X^2 = CZ \qquad\qquad \text{Equation (4)}$$

is satisfied. Here, C is a constant. From Equation (2) and Equation (4), the opening area Y of the nozzle 46 can be expressed as follows.

$$Y = \pi \{(D/2)^2 - CZ\} \qquad\qquad \text{Equation (5)}$$

Equation (5) signifies that the opening area Y of the nozzle 46 has a proportional relationship with the amount Z of movement of the needle 48. In other words, by forming the tip end portion 48a of the needle 48 as a paraboloid, the opening area Y of the nozzle 46 can be set to be proportionate to the amount Z of movement of the needle 48.

Fig. 5 shows the relationship between the amount Z of movement of the needle 48 and the flow rate (to be referred to as the ejection flow rate hereafter) of the new hydrogen gas that is ejected through the nozzle 46 in this embodiment and a conventional example. Note that the state shown in Figs. 3A and 3B is used as a reference for the amount Z of movement. As shown by a straight line L1 in the drawing, in this embodiment the tip end portion 48a of the needle 48 is set in the shape described above, and hence the rate of change in the ejection flow rate relative to the amount of movement of the needle 48 is constant. Accordingly, the spring 62 having a predetermined spring constant can be used favorably in the constitution of the needle moving means 49.

As shown in Fig. 2, the needle moving means 49 includes a piston 61 connected to the base end portion of the needle 48, and a spring (biasing member) 62 having a predetermined spring constant, which is disposed on a rear surface 61 b of the piston 61. The piston 61 and spring 62 are disposed coaxial with the nozzle 46 and needle 48. The spring 62 is interposed between the rear surface 61 b of the piston 61 and the interior of the casing 41, and biases the rear surface 61 b of the piston 61 toward the tip end portion 48a of the needle 48.

The piston 61 is supported by its outer periphery on the interior of the casing 41, and is constituted to be capable of sliding axially. A front surface 61 a of the piston 61 faces the fluid chamber 56. The main body shaft portion 48b of the needle 48 is connected to a central portion of the front surface 61 a of the piston 61, and new hydrogen gas from the main flow passage 22a is led through the supply port 42 to the remaining portion of the front surface 61 a of the piston 61.

The spring 62 is connected to a central portion of the rear surface 61 b of the piston 61, and hydrogen off-gas from the circulation passage 23 is led through a pressure inlet 70 formed in the casing 41 to the remaining portion of the rear surface 61 b of the piston 61. More specifically, a branch passage 71 having a smaller passage sectional area than the circulation passage 23 bifurcates from the circulation passage 23, and the branch passage 71 is communicated with a pressure chamber 72, which is defined by the rear surface 61 b of the piston 61 and the interior of the casing 41, via the pressure inlet 70.

Hence, the pressure of the new hydrogen gas in the main flow passage 22a acts on the front surface 61 a of the piston 61, while the pressure of the hydrogen off-gas in the branch passage 71 and the biasing force of the spring 62 act on the rear surface 61 b of the piston 61. By means of this structure, the needle 48 advances and retreats axially on the basis of the balance between the differential hydrogen gas pressure on the piston 61 and the biasing force of the spring 62.

Note that the final advancement and retreat positions of needle 48 are regulated to predetermined positions, and when the needle 48 advances to a maximum extent, the outer peripheral surface of the tip end portion 48a of the needle 48 abuts against the nozzle 46, as shown in Fig. 3A. In this state, the throat portion 52 is closed. When the needle 48 retreats to a maximum extent, the rear surface 61 b of the piston 61 abuts against a stopper, not shown in the drawing, provided in the pressure chamber 72, and thus the final position of the retreating needle 48 is regulated. When the needle 48 has retreated to the final position, its tip end portion 48a may be withdrawn entirely from the throat portion 52, or a part of the tip end portion 48a may be positioned in the throat portion 52.

Here, the relationship between the action of the needle moving means 49 and the load on the fuel cell 2 will be described briefly. When the amount of the power generation of the fuel cell 2 increases such that the amount of hydrogen gas consumed by the fuel cell 2 increases, pressure loss in the fuel cell 2 rises such that the pressure of the hydrogen off-gas in the circulation passage 23 falls. At this time, the pressure in the pressure chamber 72 falls via the branch passage 71, and hence the balance between the pressure in the pressure chamber 72, the pressure in the fluid chamber 56, and the biasing force of the spring 62 changes.

As a result, the piston 61 and the needle 48 connected thereto retreat from a state of equilibrium against the spring 62 on the basis of the balance between the differential hydrogen gas pressure on the piston 61 and the biasing force of the spring 62. Accordingly, the opening area of the nozzle 46 increases, and the flow rate of the new hydrogen gas passing through the nozzle 46 rises.

On the other hand, when the amount of the power generation of the fuel cell 2 decreases such that the amount of hydrogen gas consumed by the fuel cell 2 decreases, the pressure of the hydrogen off-gas in the circulation passage 23 rises, in contrast to the case described above. At this time, the pressure in the pressure chamber 72 rises via the branch passage 71, and hence the balance between the pressure in the pressure chamber 72, the pressure in the fluid chamber 56, and the biasing force of the spring 62 changes.

As a result, the piston 61 and the needle 48 connected thereto advance from a state of equilibrium against the spring 62 on the basis of the balance between the differential hydrogen gas pressure on the piston 61 and the biasing force of the spring 62. Accordingly, the opening area of the nozzle 46 decreases, and the flow rate of the new hydrogen gas passing through the nozzle 46 falls.

Hence, according to the fuel cell system 1 of this embodiment, flow rate control can be performed independently by the ejector 24 on the basis of the differential pressure of the hydrogen gas supply system 4, and an appropriate amount of hydrogen gas can be supplied appropriately in accordance with the load on the fuel cell 2. Furthermore, by setting the shape of the tip end portion 48a of the needle 48 in the ejector 24 as described above, the simple mechanism described above can be used as the needle moving means 49, and flow rate control can be performed easily without the use of a special actuator.

Needless to say, the structure of the needle moving means 49 is not limited to a spring and so on, as in this embodiment, and various actuators such as an electromagnetic actuator, for example, may be applied. In this case, flow rate control can be performed by the ejector 24 through simple control of the actuator. More specifically, by setting the tip end portion 48a of the needle 48 in the predetermined shape described above, the need to set the amount of movement of the needle 48 appropriately in each flow rate region of the ejection flow rate is eliminated. Hence, the actuator can be controlled simply by increasing or decreasing the voltage applied thereto, for example. Moreover, the actuator itself need not be of a high resolution.

Note that in this embodiment, hydrogen off-gas is led to the pressure chamber 72, but a gas having a different pressure to the pressure of the hydrogen gas existing in the fluid chamber 56 may be led to the pressure chamber 72, as may a mixed gas. When the fluid led to the pressure chamber 72 is the fluid ejected through the nozzle 46, this fluid may be the fluid, which is mixed gas, that passes through the diffuser 47 or the fluid, which is circulated gas or hydrogen off-gas, that is aspirated into the diffuser 47.

Further, the regulator valve 27 described above may be a pilot type regulator valve, for example, whereby the mixed gas is led to the regulator valve 27 as a pilot pressure and the new hydrogen gas supplied to the ejector 24 is pressure-regulated appropriately. Moreover, a divergent nozzle is used as the nozzle 46 in the example described above, but any tapered nozzle may be employed. In this case, the opening area of the gap between the outlet opening portion of the taper and the tip end portion of the needle serves as the opening area Y of the nozzle 46.

**Claims**

1. An ejector comprising:

   a nozzle for ejecting a fluid;
   a needle disposed coaxial with said nozzle and having a tip end portion which faces said nozzle; and
   needle moving means for causing said needle to advance and retreat axially,

   wherein a shape of said tip end portion of said needle is set such that an opening area of a gap between said tip end portion of said needle and said nozzle and amount of movement produced by said needle moving means satisfy a proportional relationship.

2. The ejector according to claim 1, wherein said tip end portion of said needle has a conical shape.

3. The ejector according to claim 1, wherein said tip end portion of said needle has a quadratic surface shape.

4. The ejector according to claim 1, wherein when an opening area of said nozzle in a state where said needle is not positioned in the position of said nozzle is set as A, a radius of said tip end portion of said needle in the position of said nozzle is set as X, an amount of movement produced by said needle moving means in a retreating direction from said nozzle is set as Z, and K is a constant, said tip end portion of said needle is shaped such that

$$X^2 = (A-KZ)/\pi$$

is established.

5. An ejector comprising:

   a nozzle for ejecting a fluid;
   a needle disposed coaxial with said nozzle and having a paraboloidal tip end portion which faces said nozzle; and
   needle moving means for causing said needle to advance and retreat axially.

**6.** The ejector according to any one of claims 1 through 5, wherein said needle moving means comprises:

a piston connected to a base end portion of said needle, said piston including a front surface and a rear surface to which a fluid is led; and
a biasing member for biasing said rear surface of said piston toward said tip end portion of said needle, wherein said needle advances and retreats on the basis of a balance between a differential fluid pressure on said piston and a biasing force of said biasing member.

**7.** The ejector according to claim 6, wherein said fluid which is led to said rear surface of said piston is a fluid which is ejected through said nozzle or a fluid which is aspirated upon ejection through said nozzle.

**8.** A fuel cell system comprising the ejector according to any one of claims 1 through 7, said ejector being incorporated into piping of said fuel cell system,
wherein said ejector combines a new fluid supplied to a fuel cell with a fluid discharged from said fuel cell and supplies the resulting mixture to said fuel cell.

# FIG.1

EP 1 722 107 A1

# FIG.2

NEW HYDROGEN GAS

MIXED GAS

HYDROGEN OFF - GAS

EP 1 722 107 A1

**FIG.3A**

**FIG.3B**

$$(X,Z) = \left(\frac{D}{2}, 0\right)$$

$$Y = KZ \cdots\cdots (1)$$

$$Y = \pi\left\{\left(\frac{D}{2}\right)^2 - X^2\right\} \cdots\cdots (2)$$

$$X = \sqrt{\left(\frac{D}{2}\right)^2 - \frac{Y}{\pi}} = \sqrt{\left(\frac{D}{2}\right)^2 - \frac{KZ}{\pi}} \cdots\cdots (3)$$

EP 1 722 107 A1

**FIG.4A**

**FIG.4B**

$$X^2 = CZ \quad \text{------}(4)$$

$$Y = \pi \left\{ \left(\frac{D}{2}\right)^2 - X^2 \right\} = \pi \left\{ \left(\frac{D}{2}\right)^2 - CZ \right\} \quad \text{------}(5)$$

# FIG.5

# FIG.6

<div align="center">**INTERNATIONAL SEARCH REPORT**</div>

| International application No. |
|---|
| PCT/JP2005/003823 |

**A. CLASSIFICATION OF SUBJECT MATTER**
$Int.Cl^7$  F04F5/04, H01M8/04

According to International Patent Classification (IPC) or to both national classification and IPC

**B. FIELDS SEARCHED**

Minimum documentation searched (classification system followed by classification symbols)
$Int.Cl^7$  F04F5/04, H01M8/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-227799 A  (Honda Motor Co., Ltd.), 14 August, 2002 (14.08.02), Full text; all drawings & US 2002/0106547 A1 | 1-8 |
| Y | Microfilm of the specification and drawings annexed to the request of Japanese Utility Model Application No. 020358/1978(Laid-open No. 124824/1979) (Honda Motor Co., Ltd.), 31 August, 1979 (31.08.79), Page 4, line 17 to page 5, line 11; Figs. 3(A), (B) (Family: none) | 1-8 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 June, 2005 (14.06.05) | 28 June, 2005 (28.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 722 107 A1**

| INTERNATIONAL SEARCH REPORT | International application No. |
| :--- | :--- |
| | PCT/JP2005/003823 |

C (Continuation). DOCUMENTS CONSIDERED TO BE RELEVANT

| Category* | Citation of document, with indication, where appropriate, of the relevant passages | Relevant to claim No. |
| :---: | :--- | :---: |
| Y | Microfilm of the specification and drawings annexed to the request of Japanese Utility Model Application No. 188358/1980(Laid-open No. 109254/1982) (Aisan Industry Co., Ltd.), 06 July, 1982 (06.07.82), Page 2, lines 4 to 8; page 4, line 16 to page 5, line 9; page 6, line 13 to page 7, line 6; Figs. 1, 2 (Family: none) | 1-8 |
| A | JP 61-106959 A  (Aisan Industry Co., Ltd.), 24 May, 1986 (24.05.86), Full text; all drawings (Family: none) | 1-5 |

Form PCT/ISA/210 (continuation of second sheet) (January 2004)

**EP 1 722 107 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002022779 A